# EUROPÄISCHE PATENTSCHRIFT

(11) **EP 0 705 466 B1**
(45) Veröffentlichungstag und Bekanntmachung des Hinweises auf die Patenterteilung: **27.08.2003**
(21) Anmeldenummer: 95912997.4
(22) Anmeldetag: 03.04.1995
(51) Int. Cl.: G06K 13/08, G06K 7/06

(54) **EINRICHTUNG ZUM LESEN EINER WERTKARTE**
CREDIT CARD READER
DISPOSITIF DE LECTURE DE CARTES DE CREDIT

(30) Priorität: 20.04.1994 EP 94810220; 06.12.1994 CH 368694
(43) Veröffentlichungstag der Anmeldung: 10.04.1996
(73) Patentinhaber: IPM International SA, 1211 Genève 16 (CH)
(72) Erfinder: DOMBRE, Georges, F-74140 Saint-Cergues (FR)
(74) Vertreter: Wenger, Joel-Théophile
(86) Internationale Anmeldenummer: CH9500071
(87) Internationale Veröffentlichungsnummer: WO95029459

(56) Entgegenhaltungen:
- EP-A- 0 218 504
- EP-A- 0 492 684
- WO-A-93/25977
- US-A- 4 742 213

## Beschreibung

Die Erfindung bezieht sich auf eine Einrichtung zum Lesen einer Wertkarte gemäss dem Oberbegriff des Anspruchs 1.

Solche Einrichtungen werden vorteilhaft in Dienstleistungsautomaten zur Abgeltung einer bezogenen Dienstleistung verwendet. Die bei der Abgeltung verwendete Wertkarte ist eine Kreditkarte oder eine vorbezahlte Wertkarte mit magnetisch oder optisch lesbarer Information oder auch eine sogenannte Chip-Karte. Als Beispiel seien Kredit- oder Chip-Karten der Norm ISO 7811 bzw. ISO 7816 genannt.

Es ist eine Einrichtung der im Oberbegriff des Anspruchs 1 genannten Art bekannt (US 4 742 213), welche einen Kanal zur Aufnahme einer Kreditkarte aufweist, der am Ende mit einem als Anschlag dienenden Federarm weitgehend abgeschlossen ist.

Bekannte Einrichtungen haben den Nachteil, dass der zur Aufnahme der Wertkarte bestimmte Kanal durch eine Fehlbedienung oder auch absichtlich durch Fremdkörper leicht verstopfbar ist. Als Fremdkörper gelten hier flache, feste Gegenstände, welche etwa die Dicke einer Wertkarte aufweisen, wie beispielsweise Münzen, Blech-, Kunststoff- oder Kartonstücke, also auch Teile einer zerbrochenen Wertkarte. Ein eingeschobener Fremdkörper, insbesondere wenn nach ihm noch eine Wertkarte nachgeschoben wurde, kann oft nur durch einen Service-Eingriff wieder entfernt werden, wodurch die Einrichtung - zum Nachteil von Betreibern und Benutzern - unter Umständen längere Zeit ansser Betrieb ist.
Aus der EP 0 492 684 A1 ist ein Kartenleser bekannt, bei dem eine Karte mittels Motorantrieb in die Leseposition befördert wird, wobei beim Einzug die Länge der Karte bestimmt wird. Weist die Karte die vorbestimmte Länge auf, schwenkt ein Anschlag so in den Kartenkanal, dass sie in der Leseposition angehalten wird. Bei einem abgebrochenen, d.h. zu kurzen Kartenteil wird der Anschlag nicht betätigt bzw. aus dem Kartenkanal wieder zurückgezogen und der Motorantrieb befördert das Kartenteil in den Auffangbehälter. Der Motorantrieb verteuert den Kartenleser.

Die WO 93/25977 beschreibt einen Kartenleser ohne Motorantrieb. Der Kartenkanal weist unmittelbar nach der Mündung im Innern des Kartenlesers keine Bodenplatte und keine Seitenführungen mehr auf. Zu kurze Karten bleiben im Mündungsschlitz stecken, bis die nächste Karte von ausserhalb des Kartenlesers in die Mündung des Kartenkanals eingeschoben wird. Das zu kurze Kartenteil fällt in einen Auffangbehälter, sobald eine weitere Karte das Kartenteil vollständig durch den Mündungsschlitz hindurch geschoben hat. Ein Ablenkmittel übt im Kartenkanal auf der flachen Oberseite der Karte eine Biegekraft aus, damit eine vollständig durch den Mündungsschlitz hindurch geschobene, zu kurze Karte in jedem Fall in den Auffangbehälter abgelenkt wird. Das Ablenkmittel belastet das Material der Karte und leistet dem Verschleiss der Karte Vorschub.

Der Erfindung liegt die Aufgabe zugrunde, eine Einrichtung zum Lesen einer Wertkarte anzugeben, die gegenüber einem anstelle der Wertkarte eingegebenen flachen Fremdkörper tolerant ist, so dass der Fremdkörper die Einrichtung nicht durch Verstopfen ausser Betrieb setzt.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: eine Schnittdarstellung eines Ausschnittes einer Einrichtung zum Lesen einer Wertkarte mit der Wertkarte in der Draufsicht,
- Fig. 2: eine weitere - in Fig. 1 als Schnitt A-A markierte -Schnittdarstellung des Ausschnittes der Einrichtung,
- Fig. 3: der geschnittene Ausschnitt der Einrichtung gemäss der Fig. 1, jedoch mit der Wertkarte und einem Fremdkörper in der Draufsicht,
- Fig. 4: ein Ausführungsbeispiel der Einrichtung mit einem nach unten offenen Auffangraum für Fremdkörper und
- Fig. 5: ein weiteres Ausführungsbeispiel der Einrichtung mit einer Rückgaberutsche für Fremdkörper.

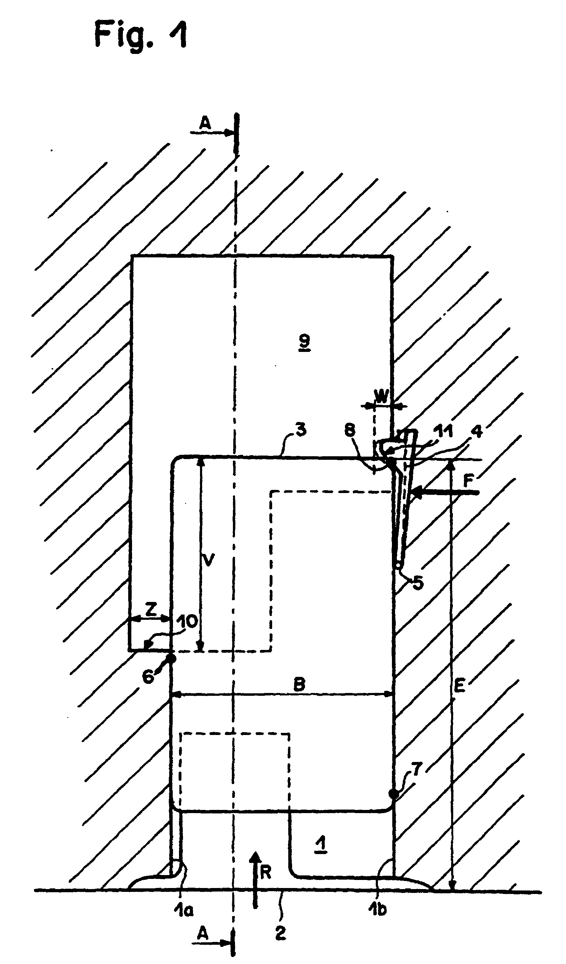

In der Fig. 1 ist mit 1 ein ein erstes seitliches Führungsmittel 1a und ein zweites seitliches Führungsmittel 1b aufweisender Kanal bezeichnet, der über eine Öffnung 2 verfügt, durch die eine Wertkarte 3 in einer Richtung R in den Kanal 1 einschiebbar ist, wobei die Wertkarte 3 durch die am Kanal 1 einander gegenüberliegenden Führungsmittel 1a und 1b geführt ist. Auf einer Seite des Kanals 1 ist ein Hebel 4 angeordnet, der in einer vorteilhaften Ausführung der Einrichtung zum Lesen der Wertkarte 3 in einer Ebene um eine Drehachse 5 drehbar ist. Die Wertkarte 3 ist im Kanal 1 in einer Endlage dargestellt, welche im wesentlichen durch ein erstes Auflager 6, ein zweites Auflager 7 und ein drittes Auflager 8 bestimmt ist, wobei die Wertkarte 3 im Kanal 1 eine Eindringtiefe E aufweist, welche im wesentlichen durch die Position des dritten Auflagers 8 bestimmt ist. Die Wertkarte verfügt über eine Breite B, auf deren Mass auch die Kanalbreite abgestimmt ist.

Das erste Auflager 6 ist ein Auflagepunkt der Wertkarte 3 auf das erste seitliche Führungsmittel 1a, während das zweite Auflager 7 ein Auflagepunkt der Wertkarte 3 auf das zweite seitliche Führungsmittel 1b ist. Das dritte Auflager 8 ist ein Auflagepunkt der Werkarte auf dem Hebel 4.

An dem der Öffnung 2 gegenüberliegenden Ende des Kanals 1 ist ein Auffangraum 9 angeordnet, so dass also der Kanal 1 von der Öffnung 2 in den Auffangraum 9 führt.

Auf der dem Hebel 4 gegenüberliegenden Seite des Kanals 1 beim ersten Auflager 6 ist eine Übergangsstelle 10 des Kanals 1 in den Auffangraum 9 als Stufe ausgebildet, wodurch sich die Breite B des Kanals um ein erstes Mass Z vergrössert. Die Übergangsstelle 10 ist bezogen auf das dritte Auflager 8 mit Vorteil um ein zweites Mass V gegen die Öffnung 2 hin zurückversetzt.

Der Hebel 4 ist um die Drehachse 5 zwischen einer ersten mit gestrichelter Linie dargestellten Endlage und einer zweiten mit durchgezogener Linie dargestellten Endlage drehbar, wobei die beiden Endlagen durch Begrenzungsmittel bestimmt sind, welche zugunsten einer übersichtlichen Darstellung nicht gezeichnet sind.

Am Hebel 4 ist im Bereich des dritten Auflagers 8 gegen die Wertkarte hin eine Ablenkfläche 11 ausgebildet.

Die erste Endlage des Hebels 4 ist die Ruhelage, welche der hebel 4 einnimmt, wenn sich keine Wertkarte 3 im Kanal 1 befindet. Der Hebel 4 ist derart mit einer Kraft F beaufschlagt, dass er ohne eine Gegenkraft in der ersten Endlage gehalten wird. Eine Gegenkraft auf den Hebel 4 ergibt sich durch die in den Bereich der Eindringtiefe E eingeschobene Wertkarte 3. Durch die Gegenkraft ist der Hebel 4 bis in die zweite Endlage schwenkbar. Mit W ist ein drittes Mass bezeichnet, um welches der Hebel 4 in der ersten Endlage seitlich in den Kanal 1 eindringt.

Die Kraft F ist vorteilhaft eine Federkraft von einer in der Zeichnung nicht dargestellten Feder.

Dadurch, dass der Hebel 4 um die Achse drehbar ausgeführt ist, kann durch eine beim Einschieben der Wertkarte 3 ausgeführte Drehbewegung auch ein Signal in einen Zustand gesetzt werden, der auf die eingeschobene Wertkarte 3 hinweist.

In einer vorteilhaften Ausführung der Einrichtung ist das erste Mass Z mindestens so gross wie das dritte Mass W.

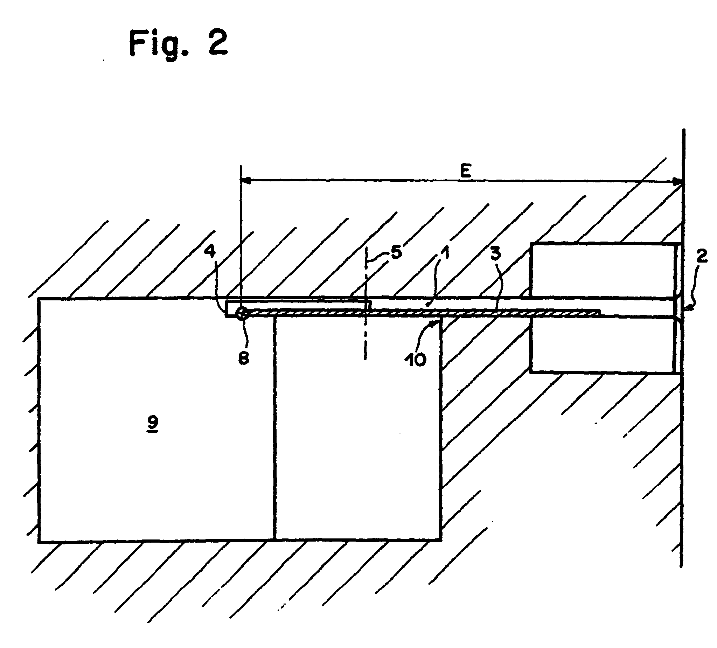

In der Fig. 2 ist eine vorteilhafte Anordnung des Auffangraumes 9 ersichtlich, in welcher der Auffangraum 9 im wesentlichen unterhalb der Auflageebene der Wertkarte 3 ausgebildet ist. In einer vorteilhaften Ausführung der Übergangsstelle 10 geht der Kanal 1 in einem wesentlichen Bereich seiner Breite auf der dem Hebel 4 gegenüberliegenden Seite des Kanals 1 in den Auffangraum 9 über, wodurch der Kanal 1 in einem wesentlichen Teil seiner Breite von der Übergangsstelle 10 an in der Richtung R vertieft ist, so dass die Auflagefläche der Wertkarte 3 im Kanal 1 von der Übergangsstelle 10 an auf der Seite mit dem Hebels 4 ist.

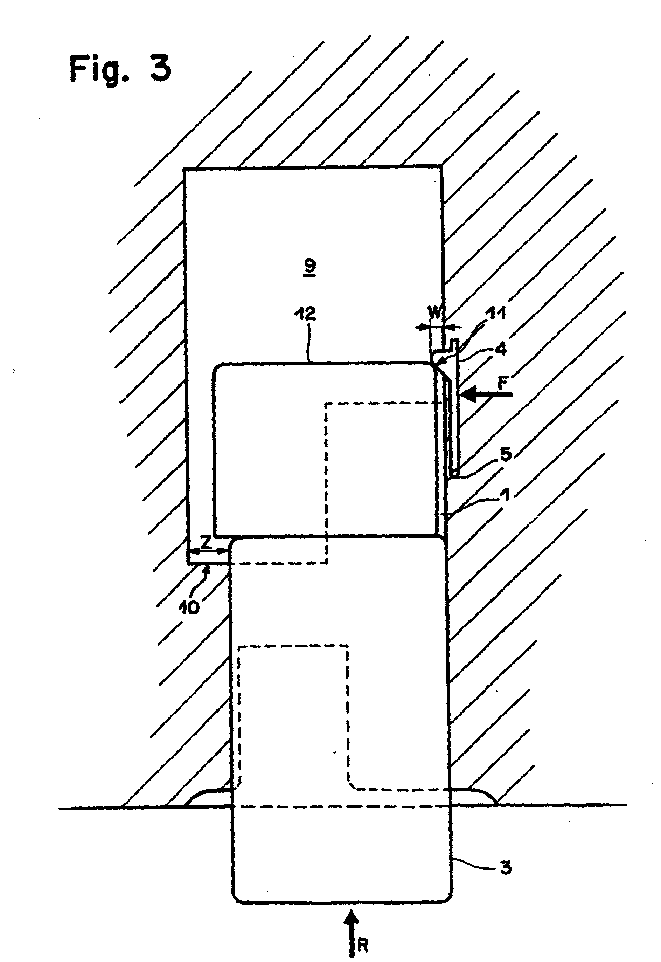

In der Fig. 3 ist der Hebel 4 in der ersten Endlage dargestellt, wobei er seitlich um das dritte Mass W in den Kanal eindringt. Mit 12 ist ein in den Kanal 1 eingeführter Fremdkörper bezeichnet, der den Hebel 4 an der Ablenkfläche 11 berührt. Der Fremdkörper 12 ist durch eine ihm nachgeschobene Wertkarte 3 durch den Kanal 1 in den Auffangraum 9 transportierbar, wobei der Fremdkörper 12 durch die Ablenkfläche 11 am dritten Auflager 8 vorbei bewegbar ist, da der Kanal 1 auf der Länge des bis zum dritten Auflager 8 eingeschobenen Fremdkörpers 12, und weiter in der Richtung R in den Auffangraum 9 um das erste Mass Z verbreitert ist.

Durch eine funktionsgerechte Ausbildung der Ablenkfläche 11 - insbesondere durch die Wahl der Neigung der Ablenkfläche 11 gegenüber der Richtung R, in welcher der Fremdkörper 12 bzw. die Wertkarte 3 einschiebbar ist - wird ein Blockieren des Fremdkörpers 12 am dritten Auflager 8 verhindert.

In der Fig. 3 ist klar ersichtlich, dass, wenn der Fremdkörper 12 die Breite B der Wertkarte aufweist - also wenn der Fremdkörper beispielsweise ein Teil einer Wertkarte ist - der Kanal 1 von der Übergangsstelle 10 an gegen den Auffangraum 9 hin mindestens um das dritte Mass W breiter ausgebildet sein muss, damit der Fremdkörper 12 an der Ablenkfläche 11 und am dritten Auflager 8 vorbei transportierbar ist; mit Vorteil gilt also Z ≥ W.

Mit Vorteil ist die Übergangsstelle 10 von der Position des im Wirkbereich der Ablenkfläche 11 liegenden dritten Auflagers 8 aus gegen die Öffnung 2 hin um das zweite Mass V zurückversetzt. Je grösser das zweite Mass V gewählt wird, desto längere Fremdkörper 12 der Breite B sind in den Auffangraum 9 lenkbar. Mit Vorteil ist das zweite Mass V etwa die halbe Länge der Wertkarte 3.

Dadurch, dass die Auflagefläche des Fremdkörpers 12 im Kanal 1 von der Übergangsstelle 10 an auf der Seite mit dem Hebel 4 ist, der Kanal 1 also auf der dem Hebel 4 gegenüber liegenden Seite in den Auffangraum 9 hin vertieft ist, wird die Wirksamkeit des Auffangraumes 9 zur Aufnahme von Fremdkörpern 12 noch verbessert.

Die beschriebene Einrichtung wird durch den anstelle der Wertkarte 3 eingegebenen flachen Fremdkörper 12 nicht verstopft, da die Einrichtung den Auffangraum 9, in welchen der Kanal 1 in der Aufnahmerichtung R der Wertkarte 3 geführt ist und weiter einen am Kanal 1 angeordneten Anschlag für die Wertkarte 3 aufweist, durch den die Eindringtiefe E der Wertkarte 3 in der Aufhahmerichtung R in den Kanal 1 derart begrenzbar ist, dass die Wertkarte 3 nicht in den Auffangraum 9 transportierbar ist.

Die Toleranz der Einrichtung gegenüber dem Fremdkörper 12 wird durch ein Ablenkmittel erhöht, durch welches der Fremdkörper 12 am genannten Anschlag vorbei in den Auffangraum 9 gelenkt wird. Das Ablenkmittel verhindert auf vorteilhafte Art, dass der Fremdkörper 12 durch den Anschlag blockiert wird.

In einer besonders vorteilhaften Ausführung der Einrichtung sind der Anschlag und das Ablenkmittel im Hebel 4 kombiniert, wobei das Ablenkmittel die Ablenkfläche 11 und der Anschlag das dritte Auflager 8 ist.

Bei Bedarf ist der Auffangraum 9 seitlich und/oder nach unten mindestens teilweise offen ausgebildet, womit der Auffangraum 9 seitlich und/oder unten durch die Einrichtung nicht begrenzt ist, so dass der in den Kanal 1 eingeführte Fremdkörper 12 in der Einrichtung nicht zurückgehalten wird.

Dadurch, dass der in den Kanal 1 eingeführte Fremdkörper 12 in der Einrichtung nicht zurückgehalten wird, ergeben sich im wesentlichen zwei Vorteile: Für einen Betreiber der Einrichtung ergibt sich der Vorteil, dass kein Service-Eingriff zum Entleeren des Auffangraumes 9 notwendig ist, während der Benutzer der Einrichtung den Vorteil erfährt, dass ein durch eine Fehlbedienung eingegebener Fremdkörper 12, beispielsweise eine Münze, selbsttätig zurückgegeben wird.

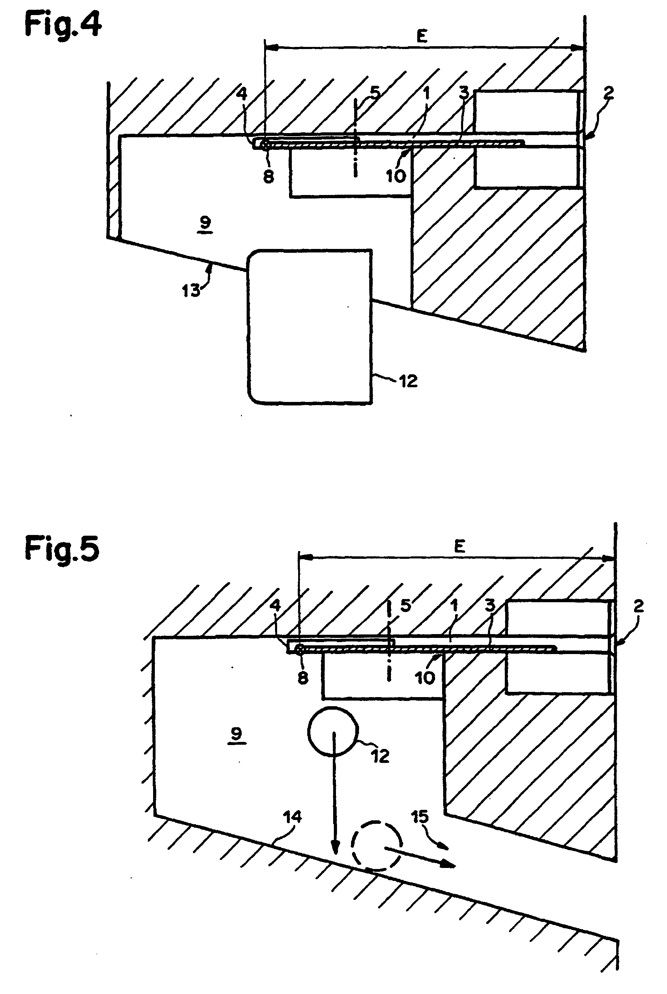

In einer in der Fig. 4 dargestellten Ausführungsbeispiel der Einrichtung weist der Auffangraum 9 nach unten einen Auslass 13 auf. Der Auffangraum 9 ist damit nach unten mindestens teilweise offen ausgebildet. Der in den Auffangraum 9 abgelenkte Fremdkörper 12 fällt durch den Auslass 13 aus der Einrichtung.

In einem weiteren in der Fig. 5 dargestellten Ausführungsbeispiel der Einrichtung verfügt diese über eine Rückgaberutsche 14, welche den Auffangraum 9 nach unten abschliesst. Im Auffangraum 9 mündet die Rückgaberutsche 14 in einen seitlichen Ausgang 15 des Auffangraumes 9. Der in den Auffangraum 9 abgelenkte Fremdkörper 12 gleitet selbsttätig über die Rückgaberutsche 14 durch den Ausgang 15 aus der Einrichtung.

In der Zeichnung ist die Einrichtung so dargestellt, dass die Wertkarte 3 schmalseitig voran in den Kanal 1 einschiebbar ist. Es versteht sich von selbst, dass die gezeigte Einrichtung mit einfachen Überlegungen in eine Variante umsetzbar ist, in der die Wertkarte 3 breitseitig voran in den Kanal 1 eingeführt werden kann.

## Patentansprüche

1. Einrichtung zum Lesen einer Wertkarte (3), mit einer Öffnung (2) zur Aufnahme der Wertkarte (3) in einer Binschiebe-Richtung (R) in einen Kanal (1), in welchem die Wertkarte (3) lesbar ist und an welchem Mittel (1a, 1b) zur Führung und Ausrichtung der Wertkarte (3) angeordnet sind, einem Auffangraum (9) zur Aufnahme von Fremdkörpern (12), wobei der Kanal (1) in den Auffangraum (9) mündet, und mindestens einem Anschlag (8) für die Wertkarte (3), durch den die Eindringtiefe (E) der Wertkarte (3) in der Einschiebe-Richtung (R) derart begrenzbar ist, daß die Wertkarte (3) nicht in den Auffangraum (9) gelangt,
**dadurch gekennzeichnet,**
**daß** die Wertkarte (3) durch die Mittel (1a, 1b) zur Führung und Ausrichtung der Wertkarte (3) auf einer Auflageebene zum Lesen positionierbar ist,
**daß** auf mindestens einer Seite des Kanals (1) Ablenkmittel (4, 11) angeordnet sind,
**daß** durch die Ablenkmittel (4, 11) Fremdkörper (12) aus dem Kanal (1) in den Auffangraum (9) lenkbar sind, und
**daß** die Ablenkmittel (4, 11) zusätzlich als Anschlag (8) einsetzbar sind.

2. Binrichtung nach Anspruch 1,
**dadurch gekennzeichnet,**
**daß** der Auffangraum (9) so ausgebildet und derart am Kanal (1) angeordnet ist, daß ein durch die Öffnung (2) in den Kanal (1) eingeführter Fremdkörper (12), der nicht selbsttätig in den Auffangraum (9) fällt, durch die dem Fremdkörper (12) im Kanal (1) nachgeschobene Wertkarte (3) in den Auffangraum (9) lenk- bzw. transportierbar ist.

3. Binrichtung nach Anspruch 1 oder 2,
**dadurch gekennzeichnet,**
**daß** das Ablenkmittel (4, 11) eine gegenüber der Einschiebe-Richtung (R) geneigte Ablenkfläche (11) aufweist und daß sich die dem Ablenkmittel (4, 11) gegenüberliegende Seite des Kanals (1) an einer Übergangsstelle (10) zwischen der Öffnung (2) und dem Ablenkmittel (4, 11) verbreitert.

4. Einrichtung nach Anspruch 3,
**dadurch gekennzeichnet,**
**dass** sich der Kanal (1) um ein Maß (Z) verbreitert, das mindestens so groß ist wie das seitlich in den Kanal (1) hineinreichende Maß (W) des Ablenkmittels (4, 11).

5. Einrichtung nach Anspruch 3 oder 4,
**dadurch gekennzeichnet,**
**daß** der Kanal (1) auf der dem Ablenkmittel (4, 11) gegenüberliegenden Seite in der Einschiebe-Richtung (R) von der Übergangsstelle (10) bis zum Auffangraum (9) hin vertieft ist.

6. Einrichtung nach einem der Ansprüche 3 - 5,
**dadurch gekennzeichnet,**
**daß** die Übergangsstelle (10) vom Wirkbereich des Ablenkmittels (4, 11) gegen die Öffnung (2) hin etwa um die halbe Länge der Wertkarte (3) zurückversetzt ist.

7. Einrichtung nach einem der vorangehenden Ansprüche,
**dadurch gekennzeichnet,**
**dass** das Ablenkmittel (4, 11) an einem Ende eines in einem gewissen Bereich um eine senkrecht zur Auflageebene angeordnete Drehachse (5) drehbaren Hebels (4) als Anschlag (8) und Ablenkfläche (11) ausgebildet ist und in einer Ruhelage mit dem Anschlag (8) und der Ablenkfläche (11) um das Mass (W) seitlich in den Kanal (1) ragt, und
**dass** das Ablenkmittel (4, 11) beim Aufnehmen der Wertkarte (3) entgegen einer Kraft (F) durch die Wertkarte (3) seitlich aus der Ruhelage so weit auslenkbar ist, dass die Wertkarte (3) zum Lesen positionierbar ist.

8. Einrichtung nach Anspruch 7,
**dadurch gekennzeichnet,**
**dass** der Hebel (4) zum Auslösen eines Signals mittels der beim Einschieben der Wertkarte (3) vom Hebel (4) ausgeführten Drehbewegung eingerichtet ist.

9. Einrichtung nach einem der vorangehenden Ansprüche,
**dadurch gekennzeichnet,**
**daß** der Auffangraum (9) seitlich und/oder nach unten mindestens teilweise offen ausgebildet und damit seitlich und/oder nach unten durch die Einrichtung nicht vollständig begrenzt ist, so daß der in den Kanal (1) eingeführte Fremdkörper (12) in der Einrichtung nicht zurückgehalten wird.

10. Einrichtung nach Anspruch 9,
**dadurch gekennzeichnet,**
**dass** der Auffangraum (9) durch eine Rückgaberutsche (14) abgeschlossen ist, und
**dass** die Rückgaberutsche (14) zum Befördern des Fremdkörpers (12) aus der Einrichtung durch einen Ausgang (15) hindurch eingerichtet ist.

## Claims

1. A device for read-out of a value card (3) having an opening (2) for receiving the value card (3) in a direction (R) of insertion into a channel (1) in which the value card (3) can be read and in which means (1a, 1b) for guiding and aligning the value card (3) are provided, a collecting space (9) for receiving foreign bodies (12), with channel (1) opening into the collecting space (9), and at least one stop (8) for the value card (3) which can limit the depth of penetration (E) of the value card (3) in the direction (R) of insertion in such a way that the value card (3) does not reach the collecting space (9), **characterized in that**
the value card (3) can be positioned by the means (1a, 1b) for guiding and aligning the value card (3) for read-out in a plane of support,
deflecting means (4, 11) are provided on at least one side of channel (1),
foreign bodies (12) can be deflected by the deflecting means (4, 11) from channel (1) into the collecting space (9) and
the deflecting means (4, 11) in addition can be used as a stop (8).

2. A device according to claim 1, **characterized in that** the collecting space (9) is of such a configuration and is so arranged in relation to channel (1) that a foreign body (12) introduced into channel (1) through the opening (2) which does not automatically drop into the collecting space (9) can be guided or transported into the collecting space (9) by the value card (3) that is inserted into channel (1) after the foreign body (12).

3. A device according to claim 1 or 2, **characterized in that** the deflecting means (4, 11) have a deflecting surface (11) inclined relative to the direction of insertion (R) and the side of channel (1) opposite to the deflecting means (4, 11) widens at a point of transition (10) between the opening (2) and the deflecting means (4, 11).

4. A device according to claim 3, **characterized in that** the channel (1) widens by an amount (Z) at least as large as the amount (W) of lateral penetration of the deflecting means (4, 11) into channel (1).

5. A device according to claims 3 or 4, **characterized in that** in the direction of insertion (R) between the point of transition (10) and the collecting space (9), channel (1) on the side opposite to the deflecting means (4, 11) is made deeper.

6. A device according to one of claims 3 to 5, **characterized in that** from the region of action of the deflecting means (4, 11) toward the opening (2), the point of transition (10) is recessed by about half the length of the value card (3).

7. A device according to one of the preceding claims, **characterized in that** at one end of a lever (4) rotatable over a certain range about an axis of rotation (5) normal to the plane of support, the deflecting means (4, 11) are shaped as a stop (8) and as a deflecting surface (11) and in a position of rest laterally penetrate with the stop (8) and the deflecting surface (11) by an amount (W) into channel (1), and the deflecting means (4, 11) during intake of the value card (3) can be deflected laterally by the value card (3) against a force (F) from their position of rest to such an extent that the value card (3) can be positioned for reading.

8. A device according to claim 7, **characterized in that** lever (4) is designed so as to trigger a signal by the rotating motion performed by lever (4) upon insertion of the value card (3).

9. A device according to one of the preceding claims, **characterized in that** the collecting space (9) is designed at least in part so as to be open laterally and/or downward, and thus is not entirely bounded by the device in a lateral and/or downward direction, so that the foreign body (12) introduced into channel (1) will not be retained in the device.

10. A device according to claim 9, **characterized in that** the collecting space (9) is closed off by a return chute (14) and the return chute (14) is designed so as to convey the foreign body (12) through an exit port (15) out of the device.

## Revendications

1. Dispositif de lecture d'une carte prépayée (3), avec une ouverture (2) pour la réception de la carte prépayée (3) dans un canal (1) en une direction d'insertion (R), dans lequel la carte prépayée (3) est lisible et sur lequel sont disposés des moyens (1a, 1b) pour le guidage et l'alignement de la carte prépayée (3), une ouverture de récupération (9) pour recevoir des corps étrangers (12), le canal (1) débouchant dans l'ouverture de récupération (9), et au moins une butée (8) pour la carte prépayée (3), par laquelle la profondeur de pénétration (E) de la carte prépayée (3) en direction d'insertion (R) est limitable de telle façon que la carte prépayée (3) ne parvient pas dans l'ouverture de récupération (9), **caractérisé en ce que**
la carte prépayée (3) est positionnable pour la lecture par les moyens (1a, 1b) de guidage et d'alignement de la carte prépayée (3) sur un plan d'appui,
que sur au moins un côté du canal ( 1), sont disposés des moyens de déflexion (4, 11)
que par les moyens de déflexion (4, 11), des corps étrangers (12) sont conduits du canal (1) jusque dans l'ouverture de récupération (9), et
que les moyens de déflexion (4, 11) font office de butée (8).

2. Dispositif selon la revendication 1, **caractérisé par en ce** que l'ouverture de récupération (9) est formée et disposée par rapport au canal (1) de telle manière qu'un corps étranger (12) introduit par l'ouverture (2) dans le canal (1), qui ne tombe pas automatiquement dans l'ouverture de récupération (9), est dirigé ou transporté vers l'ouverture de récupération (9) par la carte prépayée (3) introduite dans le canal (1) après le corps étranger (12).

3. Dispositif selon la revendication 1 ou 2, **caractérisée en ce que** le moyen de déflexion (4, 11) présente une surface de déflexion inclinée (11) par rapport à la direction d'insertion (R) et que le côté du canal (1) opposé au moyen de déflexion (4, 11) s'élargit à un lieu de passage (10) entre l'ouverture (2) et le moyen de déflexion (4, 11).

4. Dispositif selon la revendication 3, **caractérisée en ce que** le canal (1) s'élargit d'une mesure (Z) qui est au moins aussi grande que la mesure (W) entrant latéralement dans le canal (1) du moyen de déflexion (4, 11).

5. Dispositif selon la revendication 3 ou 4, **caractérisée en ce que** le canal (1) du côté opposé au moyen de déflexion (4, 11) en direction d'insertion (R) est approfondi à partir du lieu de passage (10) jusqu'à l'ouverture de récupération (9).

6. Dispositif selon une des revendications 3 - 5, **caractérisée en ce que** le lieu de passage (10) est décalé par rapport à la zone active du moyen de déflexion (4, 11) vers l'ouverture (2) environ de la moitié de la longueur de la carte prépayée (3).

7. Dispositif selon une des revendications précédentes, **caractérisée en ce que** le moyen de déflexion (4, 11), à une extrémité d'un levier (4) pivotant dans un certain secteur autour d'un axe de rotation (5) disposé perpendiculairement par rapport au plan d'appui, est conformé comme butée (8) et surface de déflexion (11), et qu'il, dans une position de repos, saille avec la butée (8) et la surface de déflexion (11) de la mesure (W) latéralement dans le canal (1), et que le moyen de déflexion (4, 11) en accueillant la carte prépayée (3) est orientable contre une force (F) par la carte prépayée (3) latéralement hors de la position de repos d'une telle mesure que la carte prépayée (3) est positionnable pour la lecture.

8. Dispositif selon la revendication 7, **caractérisée en ce que** le levier (4) est arrangé pour déclencher un signal moyennant le mouvement rotatoire exécuté par le levier (4) en insérant la carte prépayée (3).

9. Dispositif selon une des revendications précédentes, **caractérisée en ce que** l'ouverture de récupération (9) est conformée latéralement et/ou vers le bas au moins partiellement ouverte et ainsi n'est pas complètement limitée latéralement et/ou en bas par le dispositif, de sorte que le corps étranger (12) introduit dans le canal (1) n'est pas retenu dans le dispositif.

10. Dispositif selon la revendication 9, **caractérisée en ce que** l'ouverture de récupération (9) est fermée par une glissière de restitution (14), et que la glissière de restitution (14) est arrangée pour transporter le corps étranger (12) hors du dispositif par une sortie (15).
